# EUROPÄISCHE PATENTSCHRIFT

(11) **EP 1 320 788 B1**
(45) Veröffentlichungstag und Bekanntmachung des Hinweises auf die Patenterteilung: **06.04.2011**
(21) Anmeldenummer: 01978147.5
(22) Anmeldetag: 17.09.2001
(51) Int. Cl.: G05B 19/042

(54) **AUTOMATISIERUNGSANLAGE**
AUTOMATION INSTALLATION
INSTALLATION D'AUTOMATISATION

(30) Priorität: 29.09.2000 DE 10048743
(43) Veröffentlichungstag der Anmeldung: 25.06.2003
(73) Patentinhaber: SIEMENS AKTIENGESELLSCHAFT, 80333 München (DE)
(72) Erfinder: DINGES, Clemens, 90587 Obermichelbach (DE); FELD, Joachim, 90451 Nürnberg (DE); LANGE, Ronald, 90766 Fürth (DE); SCHLERETH, Michael, 91452 Wilhermsdorf (DE)
(86) Internationale Anmeldenummer: PCT/DE2001/003579
(87) Internationale Veröffentlichungsnummer: WO 2002/027416

(56) Entgegenhaltungen:
- EP-A- 0 822 473
- EP-A- 0 825 506
- DE-A- 4 413 836
- US-A- 5 777 876
- US-A- 5 805 442
- US-A- 6 061 603

## Beschreibung

Die vorliegende Erfindung betrifft eine Automatisierungsanlage mit einer Schnittstelle, über die von einem an die Automatisierungsanlage angekoppelten Rechner in der Automatisierungsanlage verfügbare Informationen über die Automatisierungsanlage abfragbar sind.

Derartige Automatisierungsanlagen sind bereits bekannt. Beispielhaft wird auf die, US-Patentschriften 5,805,442 und 6, 061, 603 sowie auf die EP 0825506 A2 verwiesen.

Beim Zugriff auf die in der Automatisierungsanlage verfügbaren Informationen ist es oftmals erforderlich, gezielt auf bestimmte Informationen zugreifen zu können. Es muss also selektierbar sein, auf welche Informationen zugegriffen werden soll. Vorab ist aber nicht bekannt, auf welche Daten zugegriffen werden soll. Insbesondere kann es sogar vorkommen, dass ein Benutzer des angekoppelten Rechners nicht einmal weiß, wie die Automatisierungsanlage, auf die er zugreift, konfiguriert ist und dergleichen mehr. Es ist daher erforderlich, dem Benutzer auf einfache Weise zu ermöglichen, sozusagen maßgeschneidert auf die in der Automatisierungsanlage verfügbaren Informationen zuzugreifen.

Die Aufgabe der vorliegenden Erfindung besteht darin, dem Benutzer eine solche Möglichkeit zu verschaffen. Insbesondere soll ihm auch ermöglicht werden, die Informationen nach seinen Wünschen zu selektieren.

Die Aufgabe wird dadurch gelöst, dass über die Schnittstelle von dem Rechner aus eine in der Automatisierungsanlage gespeicherte Suchmaschine aufrufbar ist, mittels derer die in der Automatisierungsanlage verfügbaren Informationen über die Automatisierungsanlage gemäss mindestens einem Kriterium selektierbar sind, wobei das Kriterium der Automatisierungsanlage über den Rechner in Form einer alphanumerischen Zeichenkette vorgebbar ist.

Denn dadurch hat es der Benutzer durch entsprechende Eingaben in der Hand, die in der Automatisierungsanlage verfügbaren Informationen nach Bedarf zuerst herauszufinden und danach gegebenenfalls zu sichten.

Wenn über die Schnittstelle auch mindestens eine Verbindungsliste aufrufbar ist, ist ein hierarchisch abgestufter Zugriff auf einzelne Informationen leicht realisierbar. Die Verbindungsliste(n) umfasst bzw. umfassen dabei vorzugsweise nicht anlagenspezifische Bedienfunktionen, anlagenspezifische Bedienfunktionen und/oder anlagenspezifische Angaben außer Bedienfunktionen.

Wenn über die Schnittstelle auch eine Hilfefunktion aufrufbar ist, können auch Benutzer, die mit der betreffenden Automatisierungsanlage oder Automatisierungsanlagen allgemein nicht vertraut sind, auf einfache und sichere Weise schnell gezielt mit der Automatisierungsanlage kommunizieren.

Wenn über die Schnittstelle auch eine Emailfunktion aufrufbar ist, ist auf einfache Weise eine E-Mail an eine andere an die Automatisierungsanlage angekoppelte Person verschickbar.

Wenn über die Schnittstelle durch den Rechner auch eine Nachricht in der Automatisierungsanlage hinterlegbar ist, die bei einem späteren Zugriff auf die Automatisierungsanlage über die Schnittstelle durch den Rechner oder durch einen anderen an die Automatisierungsanlage angekoppelten Rechner abrufbar ist, kann auch ohne Emailfunktion eine Nachricht für einen anderen Nutzer hinterlassen werden. Dabei kann je nach Nachricht das Abrufen der Nachricht zugriffsgeschützt sein oder nicht.

Wenn die Nachricht nach Ablauf einer Hinterlegungszeit von der Automatisierungsanlage selbsttätig gelöscht wird, muss sich der Hinterleger oder der Abrufer der Nachricht nicht um das Löschen der Nachricht kümmern.

Wenn der Zugriff auf die Automatisierungsanlage durch den Rechner passwortgeschützt ist, wird verhindert, dass nicht berechtigte Personen auf die Automatisierungsanlage lesend und/oder schreibend zugreifen. Der Zugriff kann dabei abgestuft freigebbar sein. So kann beispielsweise einem großen Teil von Nutzern ein lesender Zugriff gestattet sein, wohingegen nur einem kleinen Teil der Nutzer auch ein schreibender Zugriff gestattet ist und Veränderungen besonders wichtiger Daten nur besonders privilegierten Nutzern vorbehalten ist. Dies kann gegebenenfalls durch eine bei Rechnern übliche Benutzername/Passwort-Kombination realisiert werden.

Wenn von der Automatisierungsanlage Nachrichten über Zustände einer von der Automatisierungsanlage gesteuerten technischen Anlage derart in der Automatisierungsanlage hinterlegbar sind, dass sie durch den Rechner über die Schnittstelle abrufbar sind, spiegeln die in der Automatisierungsanlage verfügbaren Informationen stets den aktuellen Zustand der technischen Anlage wieder.

Die Schnittstelle ist aus Standardisierungsgründen vorzugsweise als Schnittstelle zum world-wide-web ausgebildet. Insbesondere sind die Suchmaschine und gegebenenfalls auch die weiteren über die Schnittstelle aufrufbaren Funktionen in ein Webportal integriert, das sozusagen die Homepage der Automatisierungsanlage darstellt.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung
- FIG 1: ein Übersichtsbild über ein Rechnersystem,
- FIG 2: ein Webportal und
- FIG 3 bis 8: verschiedene über das Webportal von FIG 2 aus aufrufbare Funktionen.

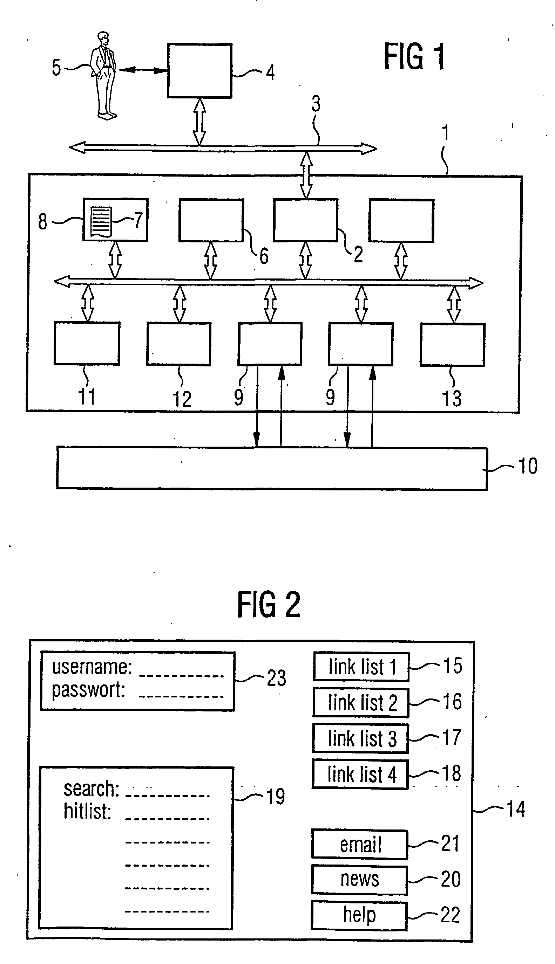

Gemäß FIG 1 ist eine Automatisierungsanlage 1 über eine Schnittstelle 2 mit dem'- sehr schematisch dargestellten - world-wide-web 3 verbunden. Mit dem world-wide-web 3 ist ferner ein Rechner 4 verbunden, über den ein Benutzer 5 auf das world-wide-web 3 zugreifen kann. Der Rechner 4 ist somit über das world-wide-web 3 an die Automatisierungsanlage 1 angekoppelt. Über die Schnittstelle 2 sind daher vom Rechner 4 aus Informationen aus der Automatisierungsanlage 1 abfragbar bzw. Nachrichten, Informationen und/oder Dateh an die Automatisierungsanlage 1 übertragbar.

Die Automatisierungsanlage 1 weist intern eine Prozessoreinheit 6 auf, deren Funktionsweise von einem Computerprogrammprodukt 7 bestimmt wird, das in einem Festwertspeicher 8, insbesondere in einem elektrisch löschbaren Festwertspeicher (EEPROM) 8, abgespeichert ist. Die Funktionsweise der Prozessoreinheit 6 wird später noch näher erläutert werden.

Die Automatisierungsanlage 1 weist ferner Ein-/Ausgabeeinheiten 9 auf, mittels derer eine technische Anlage 10 gesteuert und kontrolliert wird. Hierzu ist unter anderem in einem Prozessabbildspeicher 11 ein Abbild der Ein- und Ausgangszustände der Ein-/Ausgabeeinheiten 9 (Prozessabbild) hinterlegt. In einem Konfigurationsspeicher 12 sind ferner Informationen über die Anlagenkonfiguration und Konkordanzinformationen hinterlegt.

Aufgrund der Anlageninformation ist es möglich, ein Blockschaltbild der Automatisierungsanlage 1 und/oder der technischen Anlage 10 zu erstellen. Aufgrund der Konkordanzinformationen ist es möglich, zu ermitteln, welcher technologischen Einheit die einzelnen Speicherplätze entsprechen, die im Prozessabbildspeicher 11 für das Prozessabbild bereitgestellt werden. Gegebenenfalls kann diese Zuordnung auch vorab vorgenommen werden, so dass sie schneller ermittelbar und gegebenenfalls über die Schnittstelle 2 ausgebbar ist. Die Anlageninformation und die Konkordanzinformation bilden zusammen die Informationen über die Automatisierungsanlage 1.

Schließlich weist die Automatisierungsanlage noch einen Schnittstellenspeicher 13 auf. Im Schnittstellenspeicher 13 werden Nachrichten, Benutzernamen, Passwörter und dergleichen hinterlegt. Hierauf wird nachstehend noch näher eingegangen.

Über die Schnittstelle 2 ist vom Rechner 4 aus ein in FIG 2 näher dargestelltes Webportal 14 aufrufbar. Das Webportal 14 stellt sozusagen die Homepage der Automatisierungsanlage 1 dar. Es ist in der Automatisierungsanlage 1 im Rahmen des Computerprogrammprodukts 7 abgespeichert. Alle nachstehend beschriebenen Funktionen 15 bis 23 sind in das Webportal 14 integriert. Sie sind somit ebenfalls in der Automatisierungsanlage 1 abgespeichert.

Das Webportal 14 selbst ist von jedem beliebigen Benutzer 5 über die Schnittstelle 2 aufrufbar. Um aber im Webportal 14 dargestellte Funktionen 15 bis 22 aufrufen zu können, erfolgt zunächst eine Identitätskontrolle. Hierzu fragt die Automatisierungsanlage 1 über einen Identitätsprüfungsblock 23 einen Benutzernamen und ein Passwort ab. Nur wenn das eingegebene Passwort für den eingegebenen Benutzernamen registriert ist, wird der Zugriff auf die Funktionen 15 bis 22 freigegeben. Der Zugriff auf die Automatisierungsanlage 1 durch den Rechner 4 ist somit passwortgeschützt.

Prinzipiell reicht es aus, den Zugriff auf die Automatisierungsanlage 1 durch den Rechner 4 einstufig zu schützen. Gegebenenfalls kann der Zugriff aber auch abgestuft freigegeben werden. So kann beispielsweise für eine Vielzahl von Nutzern ein reiner Lesezugriff freigegeben sein, wohingegen ein auch schreibender Zugriff nur für einen Teil der Benutzer 5 und ein Verändern besonders wichtiger Funktionalitäten nur für einige wenige besonders privilegierte Benutzer 5 freigegeben ist.

Nachfolgend werden nun die einzelnen Funktionen 15 bis 22 beschrieben, die - Zugriffsberechtigung vorausgesetzt - vom Webportal 14 aus aufrufbar sind. Es handelt sich hierbei um Verbindungslisten 15 - 18, eine Suchmaschine 19, eine Nachrichtenfunktion 20, eine Emailfunktion 21 und eine Hilfefunktion 22.

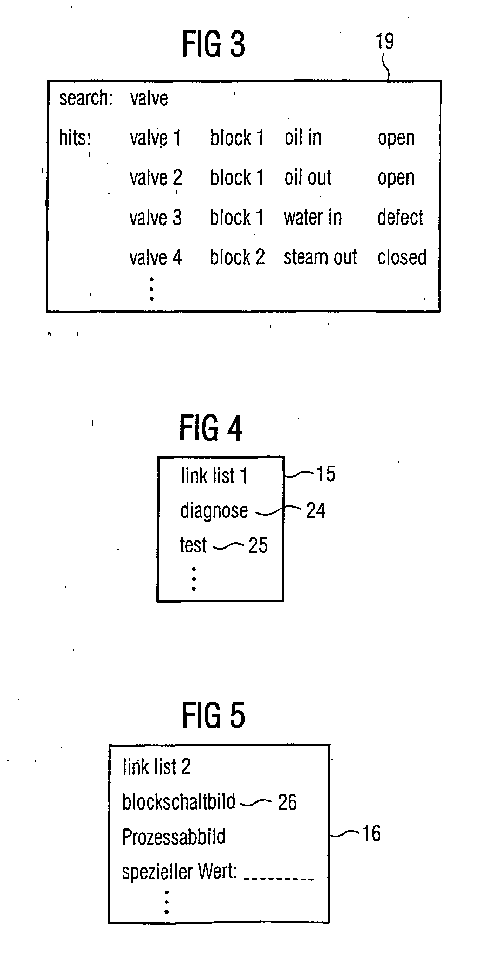

Der Suchmaschine 19 sind über den Rechner 4 in Form alphanumerischer Zeichenketten Kriterien vorgebbar, gemäß denen die in der Automatisierungsanlage 1 verfügbaren Informationen über die Automatisierungsanlage 1 selektierbar sind. Beispielsweise kann der Suchmaschine 19 gemäß FIG 3 das Kriterium "valve" vorgegeben werden. In diesem Fall werden von der Suchmaschine 19 alle Ventile (englisch valve = Ventil), deren Zustände und deren Funktion aufgelistet. Durch Anklicken eines der so ermittelten Treffer können dann weitere Informationen über dieses Ventil aus der Automatisierungsanlage 1 abgerufen werden.

Das obenstehende Kriterium "valve" ist dabei ersichtlich nur beispielhaft. Es könnten auch andere Kriterien, z. B. das Kriterium "open" zum Auflisten aller offenen Ventile oder "block 1" zum Auflisten aller Informationen über Block 1, der darin enthaltenen Elemente (Stellmotoren, Ventile, Sensoren usw.) eingegeben werden. Auf diese Weise ist ein sehr flexibles Durchsuchen und/oder Sichten der Automatisierungsanlage 1 bzw. ihrer Konfiguration und Zustände möglich.

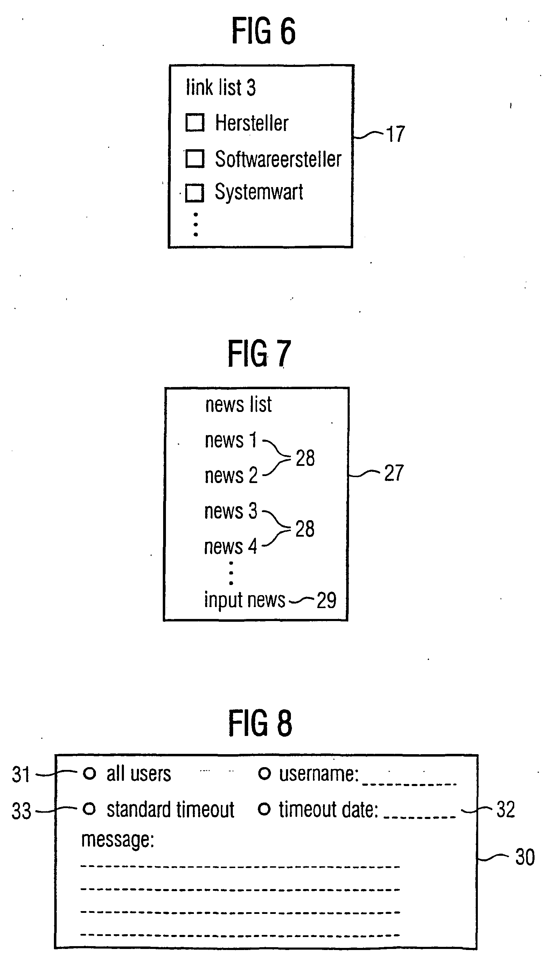

Über die Linklisten 15 bis 18 sind alternativ nicht anlagenspezifische Bedienfunktionen gemäß FIG 4, anlagenspezifische Bedienfunktionen gemäß FIG 5, anlagenspezifische Angaben außer Bedienfunktionen gemäß FIG 6 oder aktuelle Informationen abrufbar. Beim Anklicken eines der Felder 15 bis 18 wird zur jeweiligen Linkliste verzweigt.

Die Linkliste 15 für nicht anlagenspezifische Bedienfunktionen umfasst gemäß FIG 4 beispielsweise eine Diagnosefupktion 24 und einen Baugruppentest 25.

Die anlagenspezifischen Bedienfunktionen umfassen gemäß FIG 5 beispielsweise ein Anlagenübersichtsschaltbild 26, wobei in das Anlagenübersichtsschaltbild 26 die aktuellen Zustände der technischen Anlage 10 einblendbar sind. Zur Darstellung des Anlagenübersichtsschaltbilds 26 wird also das Prozessabbild mit herangezogen. Die in der Automatisierungsanlage 1 hinterlegten Nachrichten über Zustände der technischen Anlage 10. (Prozessabbild) sind somit ebenfalls durch den Rechner 4 abrufbar.

Gegebenenfalls können auch Teile der technischen Anlage 10 dargestellt und abgebildet werden. Sogar einzelne Werte einzelner Sensoren sind gezielt herausgreifbar. Die Informationen über die Automatisierungsanlage 1, die in der Automatisierungsanlage 1 gespeichert und über die Schnittstelle 2 vom Rechner 4 abrufbar sind, umfassen also insbesondere die Angaben über die Anlagenkonfiguration und das Prozessabbild. Gegebenenfalls können auch weitere Angaben, z. B. über Servicestände und dergleichen aus der Automatisierungsanlage 1 abrufbar sein.

Die anlagenspezifischen Angaben außer Bedienfunktionen umfassen gemäß FIG 6 beispielsweise Internet-/Intranetadressen von Hersteller, Softwareersteller, Systemwart und so weiter.

Die aktuelle Liste 18 umfasst beispielsweise Hinweise auf den Aktualisierungsstand oder temporär auftretende Probleme. Durch Anklicken der Emailfunktion 21 ist ein an sich bekanntes Fenster zum Erstellen und Versenden einer E-Mail aufrufbar.

Wenn die Nachrichtenfunktion 20 angeklickt wird, wird ein in FIG 7 dargestelltes Nachrichtenfenster 27 aus der Automatisierungsanlage 1 abgerufen. Es enthält eine Liste der vorhandenen Nachrichten 28. Die Nachrichten 28 sind in an sich bekannter Weise einzeln durch Anklicken aufrufbar. Der Aufruf ist dabei gegebenenfalls zugriffsgeschützt. Dies wird nachfolgend in Verbindung mit FIG 8 noch näher erläutert.

Das Nachrichtenfenster 27 gemäß FIG 7 weist ferner ein anklickbares Feld 29 "neue Nachricht" auf. Wird dieses Feld 29 angeklickt, wird ein weiteres Fenster 30, das in FIG 8 schematisch dargestellt ist, geöffnet.

Gemäß FIG 8 kann der Nachrichtenersteller durch Anklicken eines Feldes 31 "für alle" bzw. durch Eingeben eines Benutzernamens bzw. Benutzercodes bestimmen, ob seine Nachricht 28 für alle Benutzer 5 der Automatisierungsanlage 1 oder nur für einen bestimmten Benutzer 5 bestimmt ist. Im ersteren Fall ist das Abrufen der Nachricht 28 - innerhalb der autorisierten Benutzer 5 der Automatisierungsanlage 1 - nicht zugriffsgeschützt, ansonsten ist es zugriffsgeschützt. In letzterem Fall kann die jeweilige Nachricht 28 nämlich nur durch den durch den Benutzernamen und das Passwort autorisierten Benutzer 5 abgerufen werden.

Der Benutzer 5 kann ferner durch Eingabe eines expliziten Ablaufdatums in ein Feld 32 bzw. durch Anklicken eines Feldes. 33 für ein festes Ablaufdatum (z. B. 14 Tage nach Hinterlegen der Nachricht 28) selektieren, wann seine Nachricht 28 von der Automatisierungsanlage 1 selbsttätig wieder gelöscht wird. Diese Eingabe bestimmt also eine Hinterlegungszeit.

Schließlich enthält das Fenster gemäß FIG 8 noch ein Feld, in dem die eigentliche Nachricht 28 (meist ein Text) eingegeben werden kann. Die eingegebene Nachricht 28 wird dann durch den Rechner 4 über die Schnittstelle 4 in der Automatisierungsanlage 1 hinterlegt. Somit ist sie bei einem späteren Zugriff auf die Automatisierungsanlage 1 durch den Rechner 4 oder einen anderen Rechner, der an die Automatisierungsanlage 1 angekoppelt ist, abrufbar.

Die obenstehend erläuterten Funktionen 15 bis 21, 23 sind im wesentlichen für einen Benutzer 5 bestimmt, der mit der Handhabung des Webportals 14 vertraut ist. Falls der Benutzer 5 aber nicht weiß, welche Angaben er in welche Felder eintragen kann, soll, darf bzw. kann der Benutzer 5 auch die Hilfefunktion 22 anklicken. In diesem Fall wird er in allgemein bekannter Weise über ein Hilfemenü bei der Bedienung des Webportals 14 unterstützt.

Mit der erfindungsgemäß ausgestalteten Automatisierungsanlage 1 ist auf einfache Weise eine komfortable Bedienung der Automatisierungsanlage 1 über den Rechner 4 möglich.

## Patentansprüche

1. Automatisierungsanlage mit einer Schnittstelle (2), über die von einem an die Automatisierungsanlage (1) angekoppelten Rechner (4) in der Automatisierungsanlage (1) verfügbare Informationen über,die Automatisierungsanlage (1) abfragbar sind,
**dadurch gekennzeichnet,**
**dass** über die Schnittstelle (2) von dem Rechner (4) aus eine in der Automatisierungsanlage (1) gespeicherte Suchmaschine (19) aufrufbar ist, mittels derer die in der Automatisierungsanlage (1) verfügbaren Informationen über die Automatisierungsanlage (1) gemäss mindestens einem Kriterium selektierbar sind, wobei das Kriterium der Automatisierungsanlage (1) über den Rechner (4) in Form einer alphanumerischen Zeichenkette vorgebbar ist.

2. Automatisierungsanlage nach Anspruch 1,
**dadurch gekennzeichnet,**
**dass** über die Schnittstelle (2) auch mindestens eine Verbindungsliste (15 - 18) aufrufbar ist.

3. Automatisierungsanlage nach Anspruch 2,
**dadurch gekennzeichnet,**
**dass** die Verbindungsliste (15 - 18) nicht anlagenspezifische Bedienfunktionen, anlagenspezifische Bedienfunktionen und/oder anlagenspezifische Angaben außer Bedienfunktionen umfasst.

4. Automatisierungsanlage nach Anspruch 1, 2 oder 3,
**dadurch gekennzeichnet,**
**dass** über die Schnittstelle (2) auch eine Hilfefunktion (22) aufrufbar ist.

5. Automatisierungsanlage nach einem der obigen Ansprüche,
**dadurch gekennzeichnet**,
das über die Schnittstelle (2) auch eine Emailfunktion (21) aufrufbar ist.

6. Automatisierungsanlage nach einem der obigen Ansprüche,
**dadurch gekennzeichnet,**
**dass** über die Schnittstelle (2) durch den Rechner (4) auch eine Nachricht (28) in der Automatisierungsanlage (1) hinterlegbar ist, die bei einem späteren Zugriff auf die Automatisierungsanlage (1) über die Schnittstelle (2) durch den Rechner (4) oder durch einen anderen an die Automatisierungsanlage (1) angekoppelten Rechner abrufbar ist.

7. Automatisierungsanlage nach Anspruch 6,
**dadurch gekennzeichnet,**
**dass** das Abrufen der Nachricht (28) zugriffsgeschützt ist.

8. Automatisierungsanlage nach Anspruch 6,
**dadurch gekennzeichnet,**
**dass** das Abrufen der Nachricht (28) nicht zugriffsgeschützt ist.

9. Automatisierungsanlage nach Anspruch 6, 7 oder 8,
**dadurch gekennzeichnet,**
**dass** die Nachricht (28) nach Ablauf einer Hinterlegungszeit von der Automatisierungsanlage (1) selbsttätig gelöscht wird.

10. Automatisierungsanlage nach einem der obigen Ansprüche,
**dadurch gekennzeichnet,**
**dass** der Zugriff auf die Automatisierungsanlage (1) durch den Rechner (4) passwortgeschützt ist.

11. Automatisierungsanlage nach einem der obigen Ansprüche,
**dadurch gekennzeichnet,**
**dass** von der Automatisierungsanlage (1) Nachrichten über Zustände einer von der Automatisierungsanlage (1) gesteuerten technischen Anlage (10) derart in der Automatisierungsanlage (1) hinterlegbar sind, dass sie durch den Rechner (4) über die Schnittstelle (2) abrufbar sind.

12. Automatisierungsanlage nach einem der obigen Ansprüche,
**dadurch gekennzeichnet,**
**dass** die Schnittstelle (2) als Schnittstelle (2) zum world wide web (3) ausgebildet ist.

13. Automatisierungsanlage nach Anspruch 12,
**dadurch gekennzeichnet,**
**dass** die Suchmaschine (19) und ggf. auch weitere über die Schnittstelle (2) aufrufbare Funktionen (15 - 18, 20 - 23) in ein Webportal (14) integriert ist bzw. sind.

14. Computerprogrammprodukt zur Programmierung einer Automatisierungsanlage (1) nach einem der obigen Ansprüche.

## Claims

1. Automation installation having an interface (2) which a computer (4) coupled to the automation installation (1) can use to retrieve information about the automation installation (1) which is available in the automation installation (1),
**characterized**
**in that** the interface (2) can be used from the computer (4) to call up a search engine (19) which is stored in the automation installation (1) and which can be used to select the information about the automation installation (1) which is available in the automation installation (1) on the basis of at least one criterion, with the criterion for the automation installation (1) being able to be prescribed in the form of an alphanumeric character string using the computer (4).

2. Automation installation according to Claim 1,
**characterized**
**in that** the interface (2) can also be used to call up at least one connection list (15-18).

3. Automation installation, according to Claim 2,
**characterized**
**in that** the connection list (15-18) comprises non-installation-specific operating functions, installation-specific operating functions and/or installation-specific details other than operating functions.

4. Automation installation according to Claim 1, 2 or 3,
**characterized**
**in that** the interface (2) can also be used to call up a help function (22).

5. Automation installation according to one of the above claims,
**characterized in that** the interface (2) can also be used to call up an e-mail function (21).

6. Automation installation according to one of the above claims,
**characterized**
**in that** the computer (4) can also use the interface (2) to store a message (28) in the automation installation (1), which message can be retrieved via the interface (2) by the computer (4) or by another computer which can be coupled to the automation installation (1) during subsequent access to the automation installation (1).

7. Automation installation according to Claim 6,
**characterized**
**in that** retrieval of the message (28) is access-protected.

8. Automation installation system according to Claim 6,
**characterized**
**in that** retrieval of the message (28) is not access-protected.

9. Automation installation according to Claim 6, 7 or 8,
**characterized**
**in that** the message (28) is automatically erased by the automation installation (1) after a storage time has elapsed.

10. Automation installation according to one of the above claims,
**characterized**
**in that** access to the automation installation (1) by the computer (4) is password-protected.

11. Automation installation according to one of the above claims,
**characterized**
**in that** the automation installation (1) can store messages about states of a technical installation (10) controlled by the automation installation (1) in the automation installation (1) such that they can be retrieved by the computer (4) via the interface (2).

12. Automation installation according to one of the above claims,
**characterized**
**in that** the interface (2) is in the form of an interface (2) to the worldwide web (3).

13. Automation installation according to Claim 12,
**characterized**
**in that** the search engine (19) and possibly other functions (15-18, 20-23) which can be retrieved via the interface (2) is or are integrated in a web portal (14).

14. Computer program product for programming an automation installation (1) according to one of the above claims.

## Revendications

1. Installation d'automatisation comprenant une interface ( 2 ) par laquelle des informations sur l'installation ( 1 ) d'automatisation, qui sont disponibles dans l'installation ( 1 ) d'automatisation, peuvent être demandées par un ordinateur ( 4 ) couplé à l'installation ( 1 ) d'automatisation,
**caractérisée**
**en ce que** par l'interface ( 2 ), il peut être appelé par l'ordinateur ( 4 ) un moteur ( 19 ) de recherche qui est mémorisé dans l'installation ( 1 ) d'automatisation et au moyen duquel les informations sur l'installation ( 1 ) d'automatisation, qui sont disponibles dans l'installation ( 1 ) d'automatisation, peuvent être sélectionnées suivant au moins un critère, le critère de l'installation ( 1 ) d'automatisation pouvant être prescrite par l'ordinateur ( 4 ) sous la forme d'une chaîne de signes alphanumériques.

2. Installation d'automatisation suivant la revendication 1, **caractérisée en ce qu'**au moins une liste ( 15 à 18 ) de liaison peut être appelée aussi par l'interface ( 2 ).

3. Installation d'automatisation suivant la revendication 2, **caractérisée en ce que** la liste ( 15 à 18 ) de liaison comprend des fonctions de service qui ne sont pas spécifiques à l'installation et/ou des indications spécifiques à l'installation en dehors des fonctions de service.

4. Installation d'automatisation suivant la revendication 1, 2 ou 3, **caractérisée en ce qu'**une fonction ( 22 ) auxiliaire peut être appelée aussi par l'interface ( 2 ).

5. Installation d'automatisation suivant l'une des revendications précédentes, **caractérisée en ce qu'**une fonction ( 21 ) email peut être appelée aussi par l'interface ( 2 ).

6. Installation d'automatisation suivant l'une des revendications précédentes, **caractérisée en ce que**, par l'interface ( 2 ) peut être mémorisée dans l'installation ( 1 ) d'automatisation par l'ordinateur ( 4 ), également un message ( 28 ) qui lors d'un accès ultérieur à l'installation ( 1 ) d'automatisation peut être appelé, par l'intermédiaire de l'interface ( 2 ), par l'ordinateur ( 4 ) ou par un autre ordinateur couplé à l'installation ( 1 ) d'automatisation.

7. Installation d'automatisation suivant la revendication 6, **caractérisée en ce que** l'appel du message ( 28 ) est à accès protégé.

8. Installation d'automatisation suivant la revendication 6, **caractérisée en ce que** l'appel du message ( 28 ) n'est pas accès protégé.

9. Installation d'automatisation suivant la revendication 6, 7 ou 8, **caractérisée en ce** le message ( 28 ) est effacé automatiquement par l'installation ( 1 ) d'automatisation après écoulement d'une durée de mémorisation.

10. Installation d'automatisation suivant l'une des revendications précédentes, **caractérisée en ce** l'accès à l'installation ( 1 ) d'automatisation de l'ordinateur ( 4 ) est protégé par un mot de passe.

11. Installation d'automatisation suivant l'une des revendications précédentes, **caractérisée en ce que** des messages provenant de l'installation ( 1 ) d'automatisation et concernant des états d'une installation ( 10 ) technique commandée par l'installation d'automatisation peuvent être mémorisés dans l'installation ( 1 ) d'automatisation de manière à pouvoir être appelés par l'ordinateur ( 4 ) par l'intermédiaire de l'interface ( 2 ).

12. Installation d'automatisation suivant l'une des revendications précédentes, **caractérisée en ce que** l'interface ( 2) est constituée en interface ( 2 ) à world wide web ( 3 ) .

13. Installation d'automatisation suivant la revendication 12, **caractérisée en ce que** le moteur ( 19 ) de recherche et le cas échéant aussi d'autres fonctions ( 15 à 18, 20 à 23 ) pouvant être appelées par l'intermédiaire de l'interface ( 2 ) est ou sont intégrés dans un portail ( 14 ) web.

14. Produit de programme informatique pour la programmation d'une installation ( 1 ) d'automatisation suivant l'une des revendications précédentes.
